# EUROPÄISCHE PATENTSCHRIFT

(11) **EP 3 140 118 B1**
(45) Veröffentlichungstag und Bekanntmachung des Hinweises auf die Patenterteilung: **04.05.2022**
(21) Anmeldenummer: 15715772.8
(22) Anmeldetag: 17.04.2015
(51) Int. Cl.: B32B 17/10, C03C 27/12, E06B 3/673

(54) **VERBUNDGLASSCHEIBE MIT EINER RANDVERSIEGELUNG UND VERFAHREN ZUR HERSTELLUNG**
LAMINATED GLAZING PANE WITH AN EDGE SEAL AND METHOD FOR PRODUCING THE SAME
VITRAGE FEUILLETÉ À BORDURES SCELLÉES ET SON PROCÉDÉ DE FABRICATION

(30) Priorität: 06.05.2014 EP 14167126
(43) Veröffentlichungstag der Anmeldung: 15.03.2017
(73) Patentinhaber: SAINT-GOBAIN GLASS FRANCE, 92400 Courbevoie (FR)
(72) Erfinder: BUMANN, Stefan, 52156 Monschau (DE); KLEYER, Dieter, 52146 Würselen (DE); GERADS, Manfred, 52511 Geilenkirchen (DE); FALKENBERG, Hans, S-24332 Hoor (SE)
(74) Vertreter: Gebauer, Dieter Edmund
(86) Internationale Anmeldenummer: PCT/EP2015/058369
(87) Internationale Veröffentlichungsnummer: WO 2015/169563

(56) Entgegenhaltungen:
- EP-A2- 0 758 582
- DE-A1- 2 344 616
- DE-A1- 19 503 510
- DE-A1-102009 058 136
- DE-A1-102013 003 688
- DE-C1- 19 622 566
- GB-A- 325 048
- US-A- 1 818 159
- US-A- 1 992 997
- US-A- 3 794 809
- US-A- 4 617 073
- PESCHKA M ET AL: "SENSORGESTUETZTE VERSIEGELUNG VON KFZ-ISOLIERGLAS", ADHASION KLEBEN UND DICHTEN, GWV FACHVERLAG GMBH, WIESBADEN, DE, Bd. 37, Nr. 6, 1. Juni 1993 (1993-06-01), Seiten 24,26-27, XP000369332, ISSN: 0943-1454
- None

## Beschreibung

Die Erfindung betrifft eine mit einer Randversiegelung versehene Verbundglasscheibe umfassend wenigstens zwei Glasscheiben und eine zwischen diesen angeordnete Zwischenschicht, enthaltend mindestens eine Deckschicht auf Basis eines thermoplastischen Polymers. Außerdem betrifft die Erfindung ein Verfahren zur Herstellung einer solchen Verbundglasscheibe und ihre Verwendung, insbesondere als freistehende Scheibe.

Verbundglasscheiben, die Zwischenschichten umfassend korrosionsempfindliche funktionelle Schichten enthalten, können auf verschiedene Arten hergestellt werden. Im Allgemeinen wird die korrosionsempfindliche Schicht zwischen Deckschichten aus Polymer angeordnet und dadurch vor Korrosion geschützt. Im Randbereich der Verbundglasscheibe kann Korrosion der funktionellen Schicht auftreten, wenn die Schicht bis zu den Kanten der Verbundglasscheibe reicht und die Kanten freiliegen.

Bei der Herstellung von Verbundglasscheiben mit korrosionsempfindlichen funktionellen Schichten, wie zum Beispiel metallhaltigen Schichten, können Trägerfolien eingesetzt werden, auf denen die metallhaltige Schicht bereits vorhanden ist. Diese Trägerfolien können über thermoplastische Polyvinylbutyral-Folien mit den äußeren Glasscheiben verbunden werden. In DE 23 44 616 A1 wird eine elektrisch beheizbare Scheibe beschrieben, bei der die metallhaltige Schicht im Randbereich entfernt wurde, um sie vor Korrosion zu schützen. In diesem Randbereich verbindet sich die Polyvinylbutyral-Folie unmittelbar mit der Oberfläche der Trägerfolie aus Polyethylenterephthalat und sorgt so für die nötige Versiegelung. Es ist bekannt, eine Trägerfolie zu verwenden, die kleiner ist als die Glasscheiben, und die Trägerfolie zwischen zwei thermoplastischen Folien, die die gleiche Größe haben wie die Glasscheiben, einzubetten und derart mit den beiden Glasscheiben zusammenzulegen, dass die beschichtete Trägerfolie in einem Abstand von wenigstens 3 mm vor dem Rand der Glasscheibe endet (US 3 794 809 A). Das Polymer der die Trägerfolie einhüllenden thermoplastischen Folien wird dann mittels einer Wärme-Überdruck-Behandlung vernetzt, um die gewünschte Randversiegelung sicherzustellen.

Die beiden vorstehend beschriebenen Verfahren setzen voraus, dass beschichtete Trägerfolien zur Anwendung kommen, bei denen wenigstens die beschichtete Seite frei zugänglich ist, und die infolgedessen mit wenigstens einer weiteren Folie, nämlich einer thermoplastischen Folie beispielsweise aus Polyvinylbutyral, zusammengelegt werden müssen. Trägerfolien mit freiliegender Schicht haben den entscheidenden Nachteil, dass die empfindliche Oberflächenschicht bei den notwendigen Manipulationen der beschichteten Trägerfolie ungeschützt freiliegt, so dass die Gefahr einer Verletzung und/oder Verschmutzung der Oberflächenschicht besteht. Derartige Fehler sind in der fertigen Verbundglasscheibe sichtbar.

Eine weitere Möglichkeit die metallhaltige Schicht vor Korrosion zu schützen ist die Auftragung eines Dichtmittels im Randbereich. Bei Bedarf kann zusätzlich die metallhaltige Schicht im Randbereich entfernt werden. Die Verwendung von Dichtmitteln im Randbereich ist zum Beispiel problemlos möglich bei feststehenden Fahrzeugscheiben, wie beispielsweise Windschutzscheiben. Bei der Herstellung von freistehenden Seitenscheiben muss beachtet werden, dass deren Kanten bei geöffnetem Fenster freiliegen und damit die Randversiegelung sichtbar ist und mechanischen Beanspruchungen ausgesetzt ist.

Die Patentschrift DE 10 2009 058 136.7 offenbart eine abgedichtete Substratschichtverbundscheibe, die mindestens zwei transparente Glasscheiben, ein dazwischen angeordnetes Funktionsfolien-Verbundelement und eine Randabdichtung enthält. Das Funktionsfolien-Verbundelement besteht bevorzugt aus einer Funktionsfolie und zwei Laminierfolienschichten, wobei die Funktionsfolie vollständig zwischen den Laminierfolienschichten eingebettet ist und die Randfläche des Verbundelements durch die Laminierfolienschichten gebildet wird. Das Funktionsfolien-Verbundelement kann von der Flächenausdehnung her kleiner sein als die Glasscheiben, und die Randabdichtung kann als inneres Dichtmittel in dem entstehenden Randspalt angebracht sein und mit den Glasscheiben abschließen oder sie kann als äußeres Dichtmittel, die beiden Scheiben mit dem Spalt umgreifend, angebracht sein. Letztere Ausführungsart ist für ein- und ausfahrbare Seitenscheiben nicht geeignet. Als innen liegendes Dichtmittel wird ein Klebeband vorgeschlagen oder eine Dichtschnur aus einem weichen elastischen Material wie Butyl oder Silikon. Bei der Verwendung eines Klebebands ist es schwierig, auf Toleranzen und Unebenheiten im Glas zu reagieren. Zudem können Probleme bei der Versiegelung an den Ecken auftreten. Die Verwendung weicher, klebriger Dichtmaterialien in ein- und ausfahrbaren Seitenscheiben hat den Nachteil, dass bei eingefahrener Scheibe die klebrige Kante der Scheibe offen liegt.

Die deutsche Übersetzung DE 696 06 891 T2 des europäischen Patents EP 0 724 955 B1 offenbart ein Verfahren zur Herstellung einer mit einem Randverbund versehenen Verbundglasscheibe. Die Verbundglasscheibe besteht dabei aus mindestens zwei Glasscheiben mit einem dazwischen liegenden Laminat, dessen Fläche kleiner ist als die der zwei Glasscheiben, wodurch im Vorverbund ein Randspalt entsteht, in den ein thermoplastisches Polymer extrudiert wird. Das beschriebene Verfahren hat den Nachteil, dass es nur für ideale Verbundglasscheiben, deren einzelne Glasscheiben perfekt deckungsgleich ohne Versatz zueinander angeordnet sind, gut durchführbar ist. Oft sind die Glasscheiben im Vorverbund allerdings nicht perfekt deckungsgleich und es können Abweichungen in den Glasscheibendicken auftreten. Da das beschriebene Verfahren auf der Herstellung eines Kontakts zwischen einer Spritzdüse und dem Vorverbund beruht, führen Abweichungen von der idealen Situation dazu, dass der Randspalt nicht gut getroffen wird. Dies kann einerseits eine mangelhafte Abdichtung zur Folge haben und andererseits kann es zum Aufbau hoher Drücke im System kommen, da die Schmelze die Spritzdüse nicht verlassen kann. Ein weiterer Nachteil des offenbarten Verfahrens, bei dem ein Kontakt zwischen Spritzdüse und Scheibenkanten hergestellt wird, ist die starke Abnutzung der Werkzeuge an den geschliffenen Scheibenkanten.

Die deutsche Offenlegungsschrift DE 195 03 510 A1 zeigt ein Verfahren zur Herstellung einer IR-reflektierenden Verbundglasscheibe, bei dem in einen Randspalt eines Vorverbundes der beiden Einzelscheiben mit Zwischenschicht thermoplastisches Material eingesprizt wird. Die beiden Einzelscheiben des Vorverbunds weisen keinen Versatz auf, so dass das thermoplastische Material durch Extrusion in den Randspalt eingebracht werden kann.

Die europäische Patentanmeldung EP 0758582 A2 zeigt ein Verfahren, bei dem im Randbereich einer Verbundscheibe eine Strukturschicht aufgebracht wird, welche der Geometrie der Oberfläche folgt. Bei Einzelscheiben mit relativem Versatz und Randspalt zwischen den Einzelscheiben verfüllt die Strukturschicht den Randspalt zwischen den beiden Einzelscheiben nicht vollständig. Vielmehr wird das fließfähige Material nur als Schicht aufgebracht und getrocknet.

Die Aufgabe der vorliegenden Erfindung ist es, eine Verbundglasscheibe mit Randversiegelung und ein verbessertes Verfahren zu ihrer Herstellung bereitzustellen, das industriell einsetzbar ist und mit einer versetzten Anordnung der Glasscheiben im Vorverbund kompatibel ist und dabei zu einer sicher und dauerhaft versiegelten Verbundglasscheibe führt, die für die Verwendung als freistehende Scheibe geeignet ist.

Die Aufgabe der vorliegenden Erfindung wird erfindungsgemäß durch eine Verbundglasscheibe mit Randversiegelung nach dem unabhängigen Anspruch 1 und ein Verfahren zur Herstellung einer solchen Verbundglasscheibe und deren Verwendung gelöst. Bevorzugte Ausführungen der Erfindung gehen aus den Unteransprüchen hervor.

Die erfindungsgemäße Verbundglasscheibe umfasst eine erste Glasscheibe, eine zweite Glasscheibe, eine dazwischen angeordnete Zwischenschicht, die mindestens eine Deckschicht auf Basis von mindestens einem thermoplastischen Polymer umfasst. Zudem umfasst die Verbundglasscheibe eine Randversiegelung entlang von mindestens einer Kante der Verbundglasscheibe. Die Randversiegelung kann entlang einer Kante, entlang von zwei Kanten oder entlang von allen Kanten der Scheibe angeordnet sein. Die erste Glasscheibe ist zur zweiten Glasscheibe mit einem Versatz B angeordnet. Die zwischen den Glasscheiben angeordnete Zwischenschicht ist entlang von Kanten der Verbundglasscheibe um einen Randabstand A zurückgeschnitten, das heißt die Fläche der Zwischenschicht ist kleiner als die Fläche der beiden Glasscheiben. Da die Zwischenschicht entlang der Kanten der Verbundglasscheibe zurückgeschnitten ist, entsteht ein Randspalt, der von der ersten Glasscheibe, der zweiten Glasscheibe und der Zwischenschicht begrenzt wird. Die Randversiegelung ist in dem Randspalt angeordnet und füllt den Randspalt zwischen der ersten Glasscheibe und der zweiten Glasscheibe vollständig aus.

Die Erfindung stellt somit eine Verbundglasscheibe zur Verfügung, deren einzelne Glasscheiben einen Versatz B zueinander aufweisen, die optisch ansprechend versiegelt sind und keine klebrigen Kanten aufweisen, wie zum Beispiel nach einer Versiegelung mit einem Butyldichtstoff. Der Versatz B kann produktionstechnisch bedingt sein oder bewusst gewünscht sein. Der Versatz B kann zum Beispiel gewünscht sein, wenn eine der einzelnen Glasscheiben der Verbundscheibe nach Einbau in eine Rahmenöffnung entlang einer oder mehrerer Kanten etwas überstehen soll, um einen optisch ansprechenderen und glatten Übergang zwischen Scheibe und Rahmen zu erzeugen.

Die einzelnen Glasscheiben haben eine Dicke zwischen 1 mm und 4 mm. Sie können die gleiche Dicke haben, zum Beispiel beide 2,1 mm dick sein oder eine Scheibe kann dünner sein, zum Beispiel 1,6 mm. Aus Gründen der Gewichtsersparnis können auch beide Scheiben dünner sein und/oder unterschiedliche Dicken aufweisen, zum Beispiel 1,6 mm und 1,1 mm dick sein.

Die Fläche der Glasscheibe ist die Fläche der Scheibe, auf der die funktionelle Zwischenschicht angeordnet ist. Die Kanten des Vorverbunds bzw. der Verbundglasscheibe bezeichnen den Rand des Vorverbunds bzw. der Verbundglasscheibe. Die Scheibenkanten bezeichnen die Kanten der einzelnen Glasscheiben, die den Vorverbund bilden.

Je nach der gewünschten Anwendung der Scheibe kann entlang einer Kante des Vorverbunds, entlang von zwei Kanten oder entlang von allen Kanten des Vorverbunds ein Randspalt angeordnet sein, der dann mit einer Randversiegelung verfüllt werden kann.

Die thermoplastischen Polymere, die mit dem thermoplastischen Polymer der äußeren Deckschicht verschmelzbar sind, sind vorzugsweise Polymere gleicher Basiszusammensetzung wie die Polymere der Deckschichten mit oder ohne Zusatzstoffe (z. B. ein oder mehrere Haftvermittler). In einfachster Weise ist das Polymer der Randversiegelung identisch mit dem Polymer der Deckschichten.

In der erfindungsgemäßen Verbundglasscheibe beträgt der Versatz B 0,1 mm bis 1 mm. In diesem Bereich werden besonders gute Versiegelungsergebnisse erzielt.

In einer weiteren bevorzugten Ausführungsform beträgt der Randabstand A 1 mm bis 10 mm. Bei einem solchen Randabstand A können mit einer Randversiegelung die besten Ergebnisse erzielt werden. Ist der Randabstand A zum Beispiel zu klein, kann die Versiegelung bei mechanischer Belastung leicht versagen.

In einer weiteren vorteilhaften Ausführungsform weist die Verbundglasscheibe entlang der Kanten eine Dickenvariation C auf, die höchstens 0,5 mm beträgt, bevorzugt zwischen 0,02 mm bis 0,1 mm beträgt.

In einer weiteren vorteilhaften Ausführungsform enthält die Deckschicht ein thermoplastisches Polymer, bevorzugt ein thermoplastisches Polyvinylbutyral, und die Randversiegelung eine Schmelze des gleichen thermoplastischen Polymers. Als thermoplastisches Polymer für die Deckschichten der Zwischenschicht und zum Einspritzen in den Randspalt eignen sich beispielsweise thermoplastische Polyurethane, wie sie beim Herstellen von Verbundglasscheiben für die Verbindung von Platten oder Folien aus Polycarbonat mit Glasscheiben bekannt und im Handel sind. Aus wirtschaftlichen Gründen zieht man ihnen jedoch Polyvinylbutyral vor, wie es in großem Umfang für die thermoplastische Zwischenschicht bei der Verbundglasherstellung eingesetzt wird. Es hat sich gezeigt, dass sich dieses übliche Polyvinylbutyral problemlos aufschmelzen und in den Randspalt einspritzen lässt. Dabei ist lediglich darauf zu achten, dass beim Aufschmelzen und Einspritzen eine Temperatur von 230°C nicht überschritten und ein Zutritt von Luft oder Sauerstoff zu dem geschmolzenen Polyvinylbutyral soweit wie möglich verhindert wird, da es sonst zu einer Verfärbung des Polymers kommen kann.

Zur Verbesserung der Hafteigenschaften des verwendeten thermoplastischen Polymers kann ein Haftvermittler zugesetzt werden. Die Zusammensetzung des üblicherweise für die Verbundglasherstellung verwendeten Polyvinylbutyrals ist so eingestellt, dass die Haftung am Glas einen bestimmten Höchstwert nicht überschreitet. Bei zu hoher Haftung verschlechtern sich die Sicherheitseigenschaften der Verbundglasscheibe. Da dieser Gesichtspunkt im Randbereich der Verbundglasscheibe keine Rolle spielt, und da andererseits ein Interesse daran bestehen kann, dass zum Zweck einer besonders wirkungsvollen Versiegelung im Bereich des Randspalts das Polyvinylbutyral besonders gut am Glas haftet, kann in zweckmäßiger Weiterbildung der Erfindung das thermoplastische Polymer der Randversiegelung mit einem haftungserhöhenden Zusatz versehen werden, beispielsweise mit einem Silan.

Die Zwischenschicht enthält bevorzugt zwischen zwei Deckschichten aus einem thermoplastischen Polymer, eine Trägerfolie und eine auf der Trägerfolie angeordnete funktionelle korrosionsempfindliche Schicht. Das erfindungsgemäße Verfahren erfordert keine besonderen Maßnahmen zum Schutz der korrosionsempfindlichen funktionellen Schicht beim Herstellen der Verbundglasscheibe, da diese funktionelle Schicht durch die thermoplastische Deckschicht vollständig geschützt ist. Bei dem Verbundprozess ist nur eine einzige Folie, nämlich die vorgefertigte Zwischenschicht erforderlich. Die Zwischenschichten können käuflich erworben werden, und zum Beispiel eine IR-reflektierende Funktion oder zusätzlich noch eine Schallschutzfunktion haben. Werden die Scheiben als Fahrzeugscheiben verwendet, wird bevorzugt die Trägerfolie mit der funktionellen Schicht so zwischen den Glasscheiben angeordnet, dass die funktionelle Schicht nach Einbau der fertigen Verbundglasscheibe zur Fahrzeugaußenseite weist. Es kann auch eine der Deckschichten als schalldämmende akustische Polyvinylbutyral-Folie ausgeführt sein, die dann auf der zum Fahrzeuginnenraum weisenden Glasscheibe angebracht wird.

Erfindungsgemäß weist die Randversiegelung einen Neigungswinkel von einer Scheibenkante der ersten Glasscheibe zu einer Scheibenkante der zweiten Glasscheibe auf. Dabei erhält man ein optisch besonders vorteilhaftes Ergebnis.

Die Erfindung umfasst weiterhin ein Verfahren zur Herstellung einer erfindungsgemäßen Verbundglasscheibe. Das erfindungsgemäße Verfahren setzt die Verwendung einer Zwischenschicht enthaltend eine Deckschicht aus einem thermoplastischen Polymer voraus und umfasst die folgenden Verfahrensschritte:
a) Herstellung eines Vorverbunds,
   - der eine erste und eine zweite Glasscheibe und eine dazwischen angeordnete Zwischenschicht enthält,
   - der entlang mindestens einer seiner Kanten einen Randspalt aufweist und
   - in dem die beiden Glasscheiben einen Versatz B aufweisen,
b) Einbringung einer Randversiegelung in den Randspalt, indem
   - eine Schmelze eines mit der Deckschicht verschmelzbaren thermoplastischen Polymers mit einer Extrusionsdüse in den Randspalt eingespritzt wird, wobei eine Öffnung der Extrusionsdüse zwischen einer ersten Rolle und einer zweiten Rolle direkt vor dem Randspalt positioniert wird, indem
   - die erste Rolle an einer Scheibenkante der ersten Glasscheibe anliegt und die zweite Rolle an einer Scheibenkante der zweiten Glasscheibe anliegt, wobei die erste Rolle und die zweite Rolle parallel zur Fläche der Glasscheiben verschiebbar sind und so den Versatz B ausgleichen und
   - der Vorverbund mit einer Scheibenfläche auf einer dritten Rolle aufliegt, die senkrecht zur Ebene der Glasscheiben verschiebbar ist, und
c) Herstellung einer endgültigen Verbindung zwischen Glasscheiben und Zwischenschicht zu einer Verbundglasscheibe unter der Wirkung von Wärme und Druck und dabei Verschmelzen des in den Randspalt eingespritzten Polymers mit dem Polymer der Deckschicht.

Die Herstellung des Vorverbunds erfolgt aus zwei einzelnen Glasscheiben und einer Zwischenschicht. Die Zwischenschicht wird zugeschnitten und zwischen eine erste Glasscheibe und eine zweite Glasscheibe gelegt. Aus diesem Schichtenpaket aus Glasscheiben und Zwischenschicht wird ein Vorverbund hergestellt durch Entfernen der Luft zwischen den Schichten und Herstellung einer vorläufigen Verbindung. Entsprechende Verfahren wie das Vakuumsack-Verfahren, das Vakuumring-Verfahren oder die Verwendung von Walzen, die die Luft zwischen den Scheiben entfernen, sind dem Fachmann bekannt. Bei der Herstellung des Vorverbunds werden die Glasscheiben im Idealfall perfekt deckungsgleich angeordnet. Im realen Prozess kommt es hierbei immer wieder zu kleinen Abweichungen, so dass die einzelnen Glasscheiben mit einem geringen Versatz zueinander von höchstens 3 mm angeordnet sind. Für bestimmte Produkte wird ein Versatz bewusst gewählt. Der Vorverbund weist einen Randspalt auf, der erzeugt werden kann, indem die Zwischenschicht vor dem Einlegen zwischen den zwei Glasscheiben so zugeschnitten wird, dass ihre Fläche am Rand jeweils etwas kleiner ist als die Fläche der Glasscheiben. Alternativ kann die Zwischenschicht so zugeschnitten werden, dass sie deckungsgleich mit den Glasscheiben ist und nach der Herstellung einer vorläufigen Verbindung im Vorverbund wird im Randbereich das thermoplastische Polymer zum Beispiel mit einer geeigneten Bürste entfernt, sodass ein Randspalt mit der gewünschten Größe erhalten wird. Der Vorverbund kann so hergestellt werden, dass er entlang von genau einer Kante, entlang von genau zwei Kanten oder entlang von allen Kanten einen Randspalt aufweist.

Bei Vorliegen einer versetzten Anordnung der Glasscheiben zueinander im Vorverbund ist es schwierig den Randspalt mit einer Spritzdüse, die an einer Scheibenkante des Glases an- oder aufliegt, zu füllen, da die Scheibenkanten der zwei einzelnen Glasscheiben des Vorverbunds dann nicht auf gleicher Höhe sind. Dieses Problem wird überraschend gelöst mit beweglichen Rollen, die parallel zur Ebene der Glasscheiben verschiebbar sind und so den Versatz der Glasscheiben ausgleichen können. Die einzelnen Rollen stehen in Kontakt mit den Scheibenkanten der einzelnen Glasscheiben, und die Extrusionsdüse ist zwischen den parallel verschiebbaren Rollen angeordnet. Auf diese Weise wird die Extrusionsdüse trotz des Versatzes direkt vor dem Randspalt positioniert und die Schmelze des thermoplastischen Polymers wird gezielt in den Randspalt eingespritzt.

Fertigungsbedingt kann es beim Vorverbund auch zu einer Dickenvariation kommen, die auf Abweichungen in der Glasoberfläche zurückzuführen sind oder die durch Änderungen der Dicke der Zwischenschicht hervorgerufen werden. Dieses Problem wird erfindungsgemäß gelöst mit mindestens einer Rolle, die senkrecht zur Ebene der Glasscheiben verschiebbar ist. Auf der dritten Rolle liegt der Vorverbund so auf oder an, dass der Randspalt zur Öffnung der Extrusionsdüse zeigt. Da die dritte Rolle senkrecht zur Ebene der Glasscheiben beweglich ist, können mit ihr Dickenvariationen des Vorverbunds ausgeglichen werden. Zudem kann die Vorrichtung dank dieser Rolle einfach für die Herstellung von Verbundglasscheiben unterschiedlicher Dicke angepasst werden. Das Versiegelungsverfahren lässt sich bei Einsatz bekannter Verfahren problemlos automatisieren.

Das Verschmelzen des eingespritzten thermoplastischen Polymers mit dem Polymer der Deckschichten unter der Wirkung von Wärme und Druck kann während des dem Fachmann bekannten Autoklav-Prozesses erfolgen, dem der Vorverbund zur endgültigen Verklebung der einzelnen Glasscheiben mit der dazwischen liegenden Zwischenschicht unterworfen wird. Die im Autoklav-Prozess verwendeten Drücke liegen zwischen 9 bar und 14 bar und die Temperatur liegt zwischen 120 °C und 160 °C, bevorzugt bei etwa 140 °C.

Nach der Herstellung der endgültig verklebten Verbundglasscheibe kann überstehendes Polymer der Randversiegelung entfernt werden, so dass eine glatte optisch ansprechende Kante erhalten wird, die den Versatz der Glasscheiben ausgleicht.

Bevorzugt hat die Öffnung der Extrusionsdüse eine rechteckige oder ovale Geometrie, wobei die Höhe bevorzugt zwischen 0,5 mm und 0,7 mm, besonders bevorzugt bei 0,6 mm liegt und die Düse eine Breite zwischen 1,5 mm und 3 mm hat. Diese Geometrie ist gegenüber einer kreisförmigen Geometrie zu bevorzugen, da bei einer kreisförmigen Geometrie zur optimalen Befüllung des Randspalts eine große Öffnung erforderlich ist. Dafür müssen die Drücke im System so erhöht werden, dass der Prozess nicht mehr durchführbar ist. Eine zu breite Öffnung führt zu Problemen an Kurven und Ecken in der Scheibe, da dann an den Seiten der Öffnung die Schmelze des thermoplastischen Polymers nicht in den Randspalt eingespritzt wird, sondern neben/vor dem Randspalt die Düse verlässt.

In einer bevorzugten Ausführung des Verfahrens wird der Vorverbund mit dem Randspalt zur Extrusionsdüse gerichtet an der Extrusionsdüse vorbeigeführt. Dazu wird der Vorverbund zum Beispiel von einem Vakuum-Sauggreifer, der genau an die Konturen des Vorverbunds angepasst ist, fixiert. Dieser Sauggreifer kann von einem Roboter ferngesteuert sein und bringt den Vorverbund zunächst in die Ausgangslage, sodass der Vorverbund mit der Scheibenfläche auf der dritten Rolle aufliegt und die Kante der ersten Glasscheibe an der ersten Rolle und die Kante der zweiten Glasscheibe an der zweiten Rolle anliegt. Damit Abweichungen in zwei Richtungen ausgeglichen werden können, das heißt vorstehende und zurückstehende Kanten oder Unebenheiten, fährt der Greifer den Vorverbund so in die Ausgangslage, dass die Rollen jeweils aus ihrer freien Position um einen bestimmten Betrag in ihre entsprechende Bewegungsrichtung bewegt werden. Der Betrag, um den die Rollen bewegt werden, hängt von den auszugleichenden Abweichungen ab. Die Rollen werden bevorzugt um mindestens die Hälfte des Betrags des maximal zur Verfügung stehenden Ausgleichsweges in der Ausgangsposition ausgelenkt.

In einer anderen Ausführungsform kann die Extrusionsdüse mit einem ferngesteuerten Roboter am Randspalt des Vorverbunds vorbeigeführt werden. Diese Variante ist leichter zu programmieren als wenn der Vorverbund an der Extrusionsdüse vorbeigeführt wird.

In einer bevorzugten Ausführungsform des erfindungsgemäßen Verfahrens wird der Vorverbund beim Einspritzen der Schmelze des thermoplastischen Polymers aufgeheizt, bevorzugt auf 35 °C bis 100 °C und besonders bevorzugt auf 40 °C bis 80 °C. Durch das Aufheizen werden die Fließeigenschaften des thermoplastischen Polymers verbessert ohne dass die Haftung am Glas beim Einspritzen zu stark wird.

Es ist vorteilhaft, wenn der Fluss der Schmelze aus der Extrusionsdüse geregelt werden kann, da bei gleichbleibender Geschwindigkeit der Bewegung der Extrusionsdüse oder des Vorverbunds auf geraden Strecken mehr Polymer aufgenommen werden kann als an Ecken oder Kurven. Die Regelung des Flusses aus der Extrusionsdüse kann zum Beispiel mit Hilfe eines Bypasses erfolgen, der vor oder an der Extrusionsdüse angebracht ist und der in verschiedenen Positionen stehen kann. Ist der Bypass geschlossen, wird die gesamte Schmelze zur Öffnung der Extrusionsdüse gelenkt, was dem maximalen Fluss entspricht. Ist der Bypass teilweise geschlossen, wird ein Teil der Schmelze zur Öffnung der Extrusionsdüse und ein Teil in einen separaten Behälter gelenkt, was einem reduzierten Fluss entspricht. Ist der Bypass in seiner offenen Position, wird die gesamte Schmelze in einen separaten Behälter gelenkt. Diese Regulierung ermöglicht eine saubere Befüllung des Randspalts auch in Kurvenbereichen bei verlangsamter Geschwindigkeit.

Die Erfindung umfasst weiter die Verwendung einer mit dem erfindungsgemäßen Verfahren hergestellten Verbundglasscheibe als freistehende Scheibe, bevorzugt als freistehende Fahrzeugseitenscheibe. Für diese Scheiben sind optisch ansprechende und mechanisch belastbare Kanten, die sicher versiegelt sind, Voraussetzung. Geeignet sind die erfindungsgemäß hergestellten Verbundglasscheiben auch für den Einsatz in Gebäuden, insbesondere im Zugangsbereich, Fensterbereich oder Fassadenbereich, als Einbauteil in Möbeln und Geräten, und allgemein in Fortbewegungsmitteln für den Verkehr auf dem Lande, in der Luft oder zu Wasser, insbesondere in Zügen, Schiffen und Kraftfahrzeugen beispielsweise als Windschutzscheibe, Heckscheibe und/oder Seitenscheibe mit freiliegenden Kanten.

Im Folgenden wird die Erfindung anhand von Zeichnungen näher erläutert. Die Zeichnungen sind rein schematische Darstellungen und nicht maßstabsgetreu. Sie schränken die Erfindung in keiner Weise ein.

Es zeigen:
- Figur 1: einen Querschnitt eines Vorverbunds, der mit dem erfindungsgemäßen Verfahren bearbeitet werden kann,
- Figur 2: einen Querschnitt einer erfindungsgemäßen Verbundglasscheibe,
- Figur 3: eine Aufsicht auf eine Fläche einer erfindungsgemäßen Verbundglasscheibe,
- Figur 4a und b: schematische Darstellungen einer Vorrichtung zur Verwendung im erfindungsgemäßen Verfahren und
- Figur 5: ein Flussdiagramm einer möglichen Ausführungsform des erfindungsgemäßen Verfahrens.

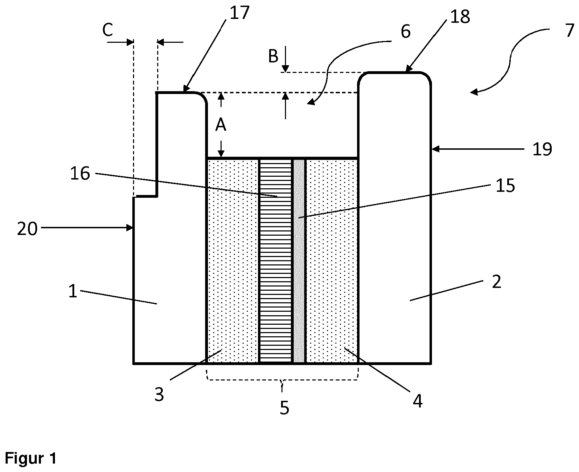

Figur 1 zeigt einen Querschnitt im Randbereich eines Vorverbunds 7, der sich aus zwei jeweils 1 mm bis 4 mm dicken Glasscheiben 1 und 2 und einer dazwischen angeordneten Zwischenschicht 5 zusammensetzt. Die Zwischenschicht 5 umfasst eine Trägerfolie 16 beispielsweise aus Polyethylenterephthalat (PET) von 0,02 mm bis 0,1 mm Dicke, die auf einer Seite mit einer IR-reflektierenden metallhaltigen Schicht 15 versehen ist, und Deckschichten 3, 4, die beispielsweise aus Polyvinylbutyral (PVB) bestehen und jeweils eine Dicke von etwa 0,4 mm aufweisen. Die funktionelle Schicht 15 kann insbesondere aus einer Mehrfachschicht bestehen, bei der die eigentliche Funktionsschicht eine Silberschicht ist, die zwischen weiteren Schichten aus Metall und/oder Metallverbindungen eingebettet ist. Anstelle einer einzigen Silberschicht kann die metallhaltige Schicht 15 auch zwei oder drei Silberschichten aufweisen, die durch Schichten aus dielektrischen Metallverbindungen voneinander getrennt sind. Die Zwischenschicht 5 kann auch so aufgebaut sein, dass eine beschichtete PET-Folie auf der Schichtseite über eine Kleberschicht mit einer weiteren, jedoch unbeschichteten PET-Folie verbunden ist, wobei diese Verbundfolie auf beiden Seiten mit einer Deckschicht 3, 4 aus thermoplastischem Polymer wie Polyvinylbutyral versehen ist. Für diesen Zweck geeignete Zwischenschichten 5 sind beispielsweise in US 4.368.945, EP 0 303 586 und EP 0 303 587 beschrieben. Zwischenschichten 5 dieser Art werden von den Herstellern als Folienbänder im Endlosverfahren hergestellt und in Rollenform geliefert. Da die Zwischenschicht 5 an den Kanten, die versiegelt werden sollen, zurückgeschnitten ist, weist der Vorverbund 7 einen Randspalt 6 mit einem Randabstand A auf, der sich aus dem Unterschied in der Flächenausdehnung der Zwischenschicht 5 und der der Glasscheiben 1, 2 im Randbereich ergibt. Der Randabstand A beträgt 1 mm bis 6 mm. Bei der Herstellung des Vorverbunds 7 kann es fertigungstechnisch zu einem Versatz B der beiden Glasscheiben 1, 2 zueinander kommen. In dem Fall wird der Randabstand A ausgehend von der im Randbereich zurückversetzten Glasscheibe 1 gemessen und bezieht sich auf den Abstand zwischen der Scheibenkante 17 der zurückversetzten Glasscheibe 1 und dem Beginn der Zwischenschicht 5. Der Versatz B führt zu Schwierigkeiten beim Ausfüllen des Randspalts 6 mit einer am Vorverbund 7 anliegenden Extrusionsdüse 12, da die Scheibenkanten 17, 18 der einzelnen Glasscheiben 1, 2 nicht auf der gleichen Höhe angeordnet sind. Zudem können Dickenvariationen C des Vorverbunds 7 auftreten, die im gezeigten Beispiel durch Abweichungen der Dicke einer Glasscheibe 1 hervorgerufen werden, die bei der Verwendung einer am Vorverbund 7 anliegenden Extrusionsdüse zu Problemen führen können. Die Scheibenflächen 19, 20 sind die parallel zueinander angeordneten äußeren Flächen der Glasscheiben 1, 2, an denen ein Glasgreifer den Vorverbund 7 fixieren kann oder mit denen der Vorverbund 7 auf einer Lagerrolle aufliegen kann.

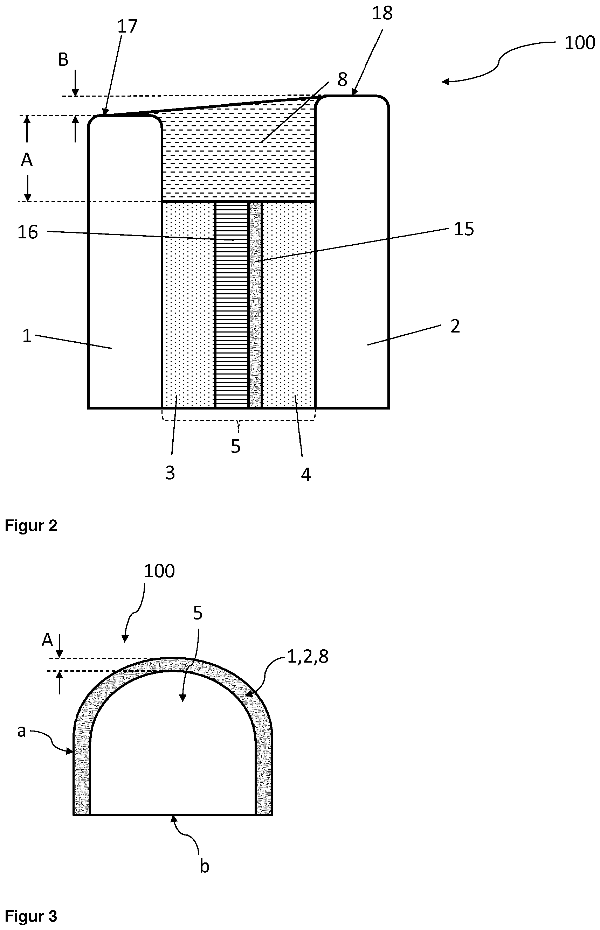

Figur 2 zeigt einen Querschnitt im Randbereich einer nach dem erfindungsgemäßen Verfahren hergestellten Verbundglasscheibe 100, die eine erste Glasscheibe 1, eine zweite Glasscheibe 2 und eine Zwischenschicht 5 enthaltend Deckschichten 3, 4 aus Polyvinylbutyral, eine Trägerfolie 16 aus Polyethylenterephthalat, eine IR-reflektierende metallhaltige Schicht 15 und eine Randversiegelung 8 aus zum Beispiel Polyvinylbutyral umfasst. Die Randversiegelung 8 versiegelt die Verbundglasscheibe 100 gegen Eindringen von Schmutz und Feuchtigkeit und schützt so die metallhaltige Schicht 15 vor Korrosion. Die Randversiegelung 8 schließt mit den Scheibenkanten 17, 18 der Glasscheiben 1, 2 ab und erstreckt sich über den gesamten Randabstand A und auch teilweise über den Bereich des Versatzes B, wie in Figur 2 gezeigt ist. Die Rand-versiegelung weist im gezeigten Beispiel einen Neigungswinkel von der Scheibenkante 17 der ersten Glasscheibe 1 zur Scheibenkante 18 der zweiten Glasscheibe 2 auf. Nach der Herstellung der endgültigen Verbundglasscheibe 100 unter der Wirkung von Wärme und Druck verschmilzt das Polymer der Randversiegelung 8 mit dem Polymer der Deckschichten 3, 4, so dass praktisch keine sichtbare Trennlinie zurückbleibt. Eine optisch einwandfreie Kante der Randversiegelung 8 kann zum Beispiel durch Abschleifen erhalten werden, wobei überstehende Randversiegelung 8 entfernt wird.

Figur 3 zeigt eine Aufsicht auf eine Fläche einer erfindungsgemäßen Verbundglasscheibe 100. Aus Gründen der übersichtlichen Darstellung ist ein Versatz B nicht dargestellt. Entsprechend der Form der Glasscheiben 1, 2 ist die Zwischenschicht 5 so zugeschnitten, dass sie an den Kanten (a), an denen die Versiegelung erfolgen soll, um einige Millimeter kleiner ist als die beiden Glasscheiben 1, 2, so dass die Zwischenschicht 5 gegenüber der zu versiegelnden Kante (a) des Vorverbunds um den Randabstand A zurückgesetzt ist. Der Randabstand A beträgt vorzugsweise 1 bis 6 mm. Da es sich bei der dargestellten Verbundglasscheibe 100 um eine versenkbare Seitenscheibe handelt, bei der der untere Randbereich auch im geschlossenen Zustand des Fensters im Türschacht verborgen ist, braucht die untere Kante (b) der Verbundglasscheibe 100 nicht versiegelt zu werden, so dass hier die Zwischenschicht 5 bis an die Kante der Verbundglasscheibe 100 heranreichen kann. Nur entlang der zu versiegelnden Kante (a) ist eine Randversiegelung 8 angebracht.

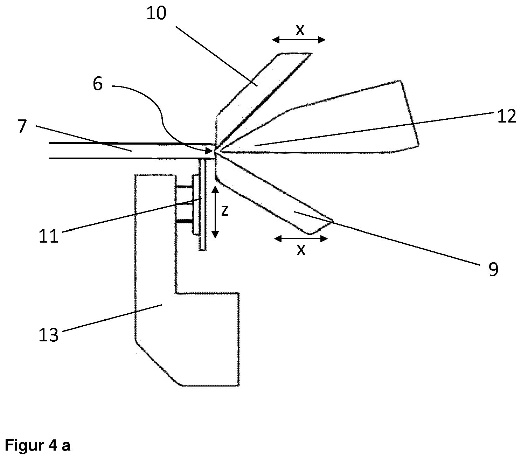

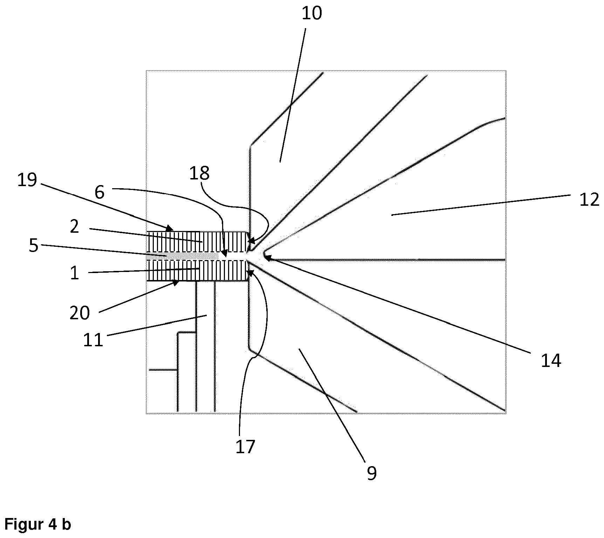

Figuren 4 a und 4 b zeigen eine schematische Darstellung einer Vorrichtung zur Durchführung des erfindungsgemäßen Verfahrens. Die Darstellung ist nicht maßstabsgetreu. Der Vorverbund 7 umfassend die erste Glasscheibe 1, die zweite Glasscheibe 2 und die Zwischenschicht 5 liegt mit einer Scheibenfläche 20 auf einer dritten Rolle 11 auf, die senkrecht zur Ebene der Glasscheiben 1, 2 in der eingezeichneten Richtung z verschiebbar ist. Die dritte Rolle 11 ist zum Beispiel federnd gelagert an einem Befestigungsarm 13 befestigt, wobei der Befestigungsarm 13 an Stelle der Rolle 11 federnd gelagert sein kann. Die Scheibenkante 17 der ersten Glasscheibe 1 liegt an der ersten Rolle 9 an und die Scheibenkante 18 der zweiten Glasscheibe 2 liegt an der zweiten Rolle 10 an. Die beiden Rollen 9, 10 sind federnd gelagert und parallel zur Ebene der Glasscheiben 1, 2 in der eingezeichneten Richtung x verschiebbar. Die Extrusionsdüse 12 wird mit Hilfe der Rollen direkt vor dem Randspalt 6 positioniert, so dass die Extrusionsdüsenöffnung 14 zum Randspalt 6 weist.

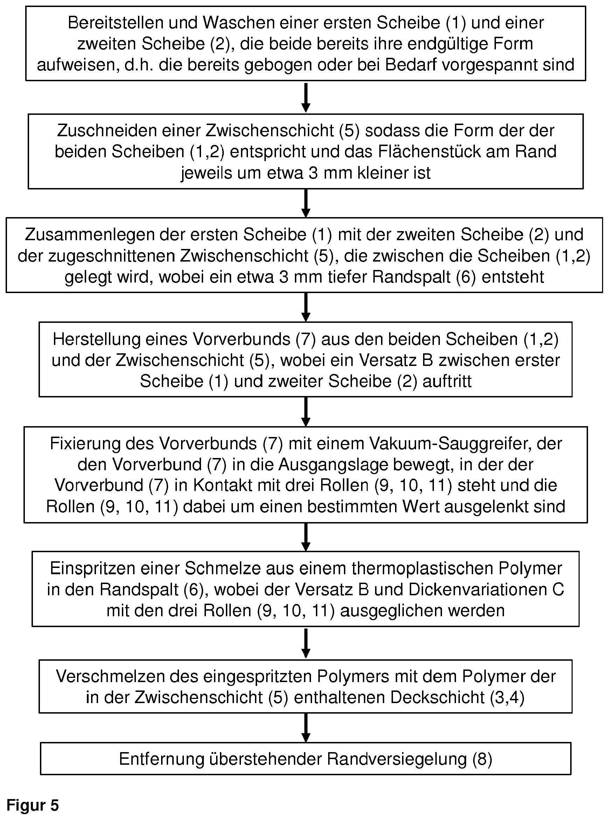

Figur 5 zeigt ein Flussdiagramm einer möglichen Ausführungsform des erfindungsgemäßen Verfahrens. Zunächst werden eine erste Glasscheibe 1 und eine zweite Glasscheibe 2 bereitgestellt und gewaschen. Die beiden Glasscheiben 1, 2 weisen bereits vor ihrem Zusammenlegen ihre endgültige Form und Größe auf, wie es bei der Herstellung von Verbundglas notwendig und allgemein üblich ist. Bei der Herstellung von gebogenem Verbundglas werden die beiden Glasscheiben 1, 2 gebogen und gegebenenfalls mehr oder weniger vorgespannt, um ihnen eine höhere mechanische Festigkeit und/oder Sicherheitsglaseigenschaften zu verleihen. Anschließend wird eine Zwischenschicht 5 enthaltend eine Deckschicht 3, 4 so zugeschnitten, dass die Form der Zwischenschicht 5 der Form der Glasscheiben 1, 2 entspricht, allerdings am Rand jeweils um etwa 3 mm kleiner ist. Die zugeschnittene Zwischenschicht 5 wird zwischen die erste Glasscheibe 1 und die zweite Glasscheibe 2 gelegt, wobei ein etwa 3 mm tiefer Randspalt 6 entsteht. Anschließend wird aus diesem Schichtenpaket ein sogenannter Vorverbund 7 hergestellt, wie es bei der Herstellung von Verbundglas bekannt und üblich ist. Das Verfahren zum Herstellen des Vorverbunds 7 kann beispielsweise darin bestehen, dass das Schichtenpaket auf eine Temperatur von etwa 80 bis 90°C erwärmt und mit einem Walzenpaar zusammengewalzt wird, wobei die Luft zwischen den Schichten herausgepresst und eine vorläufige Verklebung der Schichten erreicht wird. Stattdessen kann das Verfahren zum Herstellen des Vorverbunds 7 auch in einem Vakuumverfahren bestehen, bei dem die Luft zwischen den Schichten abgesaugt und, ebenfalls unter Erwärmung des Schichtenpakets bis auf eine Temperatur von etwa 70 bis 100°C, eine vorläufige Verklebung der Schichten erreicht wird. Der hergestellte Vorverbund 7 weist einen auf der Umfangsseite offenen Randspalt 6 auf, wobei die Glasscheiben 1, 2 mit einem Versatz B angeordnet sind. Der Vorverbund 7 wird mit Hilfe eines Vakuum-Sauggreifers fixiert und in seine Ausgangslage bewegt, in der der Randspalt 6 zur Extrusionsdüsenöffnung 14 zeigt. In dieser Ausgangslage steht der Vorverbund 7 im Randbereich in Kontakt mit drei Rollen 9, 10, 11, von denen zwei Rollen 9,10 je an den Scheibenkanten der einzelnen Glasscheiben 1, 2 anliegen und eine dritte Rolle 11 an der Scheibenfläche des Vorverbunds 7 anliegt bzw. der Vorverbund 7 auf der dritten Rolle 11 aufliegt. Die dritte Rolle 11 kann Dickenvariationen C des Vorverbunds 7 ausgleichen, während die erste Rolle 9 und die zweite Rolle 10 den Versatz (B) der Glasscheiben ausgleichen. Wenn der Sauggreifer den Vorverbund 7 in die Ausgangslage bewegt, werden die drei Rollen jeweils um einen bestimmten Wert ausgelenkt. Dies ist notwendig, damit Abweichungen in zwei Richtungen ausgeglichen werden können, das heißt zum Beispiel mit der dritten Rolle 11 Dickenvariationen C an dünneren Stellen und dickeren Stellen des Vorverbunds 7 ausgeglichen werden können. Die dritte Rolle 11 kann nicht nur Dickenvariationen C des Vorverbunds 7 ausgleichen, sondern auch andere Verformungen der Glasscheiben 1, 2 im Randbereich, die zu Unterschieden in der eingezeichneten Richtung z führen, ausgleichen. Falls die Glasscheiben 1, 2 gebogen sind, kann mit Hilfe des Vakuum-Sauggreifers der Vorverbund 7 so ausgerichtet werden, dass der Randspalt 6 zur Extrusionsdüsenöffnung 14 zeigt. Dabei kann der Sauggreifer selbst den Vorverbund 7 für die Dauer des Ausspritzens "gerade biegen" oder der Sauggreifer kann den Vorverbund 7 so kippen, dass der Randspalt 6 wieder zur Extrusionsdüsenöffnung 14 zeigt. Der Randspalt 6 wird mit einem thermoplastischen Polymer, wie zum Beispiel mit aufgeschmolzenem Polyvinylbutyral ausgespritzt, dem man eventuell einen Haftvermittler beimischen kann. Es kann ratsam sein, den Vorverbund 7 beim Ausspritzen des Randspalts 6 auf eine erhöhte Temperatur von beispielsweise 40 °C bis 80 °C aufzuheizen. Zu diesem Zweck kann der Vorverbund 7 entweder unmittelbar vor dem Ausspritzen des Randspalts vorgewärmt werden, oder das Ausspritzen des Randspalts kann unmittelbar nach dem Vorverbindeprozess erfolgen, solange der Vorverbund 7 von diesem Prozess her noch eine erhöhte Temperatur aufweist. Das Ausspritzen des Randspalts 6 kann auch bei Raumtemperatur vorgenommen werden.

Nachdem auf diese Weise der Randspalt 6 mit zum Beispiel Polyvinylbutyral ausgefüllt ist, wird der Vorverbund 7 dem üblichen Autoklavprozess bei einer Temperatur von etwa 140°C und einem Druck von etwa 10 bar unterworfen. Bei dieser Autoklavbehandlung verschmelzen das in den Randspalt 6 eingespritzte Polyvinylbutyral und das Polyvinylbutyral der Deckschicht 3, 4 der Zwischenschicht 5 miteinander zu einer vollständig homogenen störungsfreien Schicht. Die Begrenzungslinie der beschichteten Trägerfolie 16 ist zwar bei genauem Hinsehen unter bestimmten Beleuchtungsbedingungen als solche noch sichtbar, doch ist diese Begrenzungslinie so unauffällig, dass der optische Aspekt insgesamt hierdurch nicht beeinträchtigt wird. Anschließend werden die Kanten (a, b) der Verbundglasscheibe 100 bearbeitet, um eventuell überstehende Randversiegelung 8 zu entfernen. Dies kann durch Abschleifen der Kanten erfolgen.

### Bezugszeichenliste

- 1: erste Glasscheibe
- 2: zweite Glasscheibe
- 3,4: Deckschicht
- 5: Zwischenschicht
- 6: Randspalt
- 7: Vorverbund
- 8: Randversiegelung
- 9: erste Rolle
- 10: zweite Rolle
- 11: dritte Rolle
- 12: Extrusionsdüse
- 13: Befestigungsarm
- 14: Öffnung der Extrusionsdüse
- 15: funktionelle korrosionsempfindliche Schicht
- 16: Trägerfolie
- 17, 18: Scheibenkante
- 19, 20: Scheibenfläche
- 100: Verbundglasscheibe
- A: Randabstand
- B: Versatz
- C: Dickenvariation
- a, b: Kante des Vorverbunds oder Kante der Verbundscheibe
- x: Bewegungsrichtungen der ersten und zweiten Rolle
- z: Bewegungsrichtungen der dritten Rolle

## Patentansprüche

1. Verbundglasscheibe (100) mindestens umfassend eine erste Glasscheibe (1), eine zweite Glasscheibe (2), eine dazwischen angeordnete Zwischenschicht (5), welche mindestens eine Deckschicht (3,4) auf Basis von mindestens einem thermoplastischen Polymer umfasst, und eine Randversiegelung (8), wobei
- die erste Glasscheibe (1) zur zweiten Glasscheibe (2) mit einem Versatz B angeordnet ist, wobei eine erste Scheibenkante (17) der ersten Glasscheibe (1) gegenüber einer zweiten Scheibenkante (18) der zweiten Glasscheibe (2) rückversetzt ist, wobei der Versatz B 0,1 mm bis 1 mm beträgt,
- die Zwischenschicht (5) entlang von mindestens einer Kante (a) der Verbundglasscheibe (100) um einen Randabstand A zurückgeschnitten ist,
- die Randversiegelung (8) in einem Randspalt (6) angeordnet ist, der von der ersten Glasscheibe (1), der zweiten Glasscheibe (2) und der Zwischenschicht (5) begrenzt wird und
- die Randversiegelung (8) ein mit dem Polymer der Deckschichten (3,4) verschmelzbares Polymer enthält, wobei die Randversiegelung (8) mit den Scheibenkanten (17, 18) der Glasscheiben (1, 2) abschließt und sich über den gesamten Randabstand A und teilweise über den Bereich des Versatzes B erstreckt, wobei die Randversiegelung (8) einen Neigungswinkel von der ersten Scheibenkante (17) zur zweiten Scheibenkante (18) aufweist, und wobei die Randversiegelung (8) durch Extrusion in den Randspalt (6) eingebracht ist.

2. Verbundglasscheibe (100) nach Anspruch 1, wobei der Randabstand A 1 mm bis 10 mm beträgt.

3. Verbundglasscheibe (100) nach einem der Ansprüche 1 bis 2, wobei die Verbundglasscheibe (100) entlang der Kanten (a) eine Dickenvariation C aufweist, die höchstens 0,5 mm beträgt, bevorzugt 0,02 mm bis 0,1 mm beträgt.

4. Verbundglasscheibe (100) nach einem der Ansprüche 1 bis 3, wobei die Deckschicht (3,4) ein thermoplastisches Polymer, bevorzugt ein thermoplastisches Polyvinylbutyral, enthält und die Randversiegelung (8) eine Schmelze des gleichen thermoplastischen Polymers enthält.

5. Verbundglasscheibe (100) nach Anspruch 4, wobei dem verwendeten thermoplastischen Polymer ein Haftvermittler zugesetzt wird.

6. Verbundglasscheibe (100) nach einem der Ansprüche 1 bis 5, wobei die Zwischenschicht (5) mindestens eine Deckschicht (3, 4), eine Trägerfolie (16), eine darauf angeordnete funktionelle korrosionsempfindliche Schicht (15) und eine weitere Deckschicht (3, 4) umfasst.

7. Verfahren zum Herstellen einer Verbundglasscheibe (100) nach einem der Ansprüche 1 bis 6, wobei
a) ein Vorverbund (7) aus den zwei Glasscheiben (1,2) und der Zwischenschicht (5) hergestellt wird,
b) eine Randversiegelung (8) eingebracht wird, indem eine Schmelze eines mit der Deckschicht (3,4) verschmelzbaren thermoplastischen Polymers mit einer Extrusionsdüse (12) in den Randspalt (6) eingespritzt wird, wobei die Öffnung (14) der Extrusionsdüse (12) zwischen einer ersten Rolle (9) und einer zweiten Rolle (10) direkt vor dem Randspalt (6) positioniert wird, indem
- die erste Rolle (9) an der Scheibenkante (17) der ersten Glasscheibe (1) anliegt und die zweite Rolle (10) an der Scheibenkante (18) der zweiten Glasscheibe (2) anliegt, wobei die erste Rolle (9) und die zweite Rolle (10) parallel zur Fläche der Glasscheiben (1,2) verschiebbar sind und so den Versatz B ausgleichen und
- der Vorverbund (7) mit einer Scheibenfläche (19, 20) auf einer dritten Rolle (11) aufliegt, die senkrecht zur Fläche der Glasscheiben (1,2) verschiebbar ist und
c) bei Zufuhr von Wärme und Anlegen von Druck die Glasscheiben (1,2) und die Zwischenschicht (5) zur Verbundglasscheibe (100) verbunden werden und das in den Randspalt (6) eingespritzte Polymer mit dem Polymer der Deckschicht (3,4) verschmilzt.

8. Verfahren nach Anspruch 7, wobei an den Kanten (a, b) der in Schritt c) erhaltenen Verbundglasscheibe (100) überstehende Randversiegelung (8) entfernt wird.

9. Verfahren nach Anspruch 7 oder 8, wobei die Öffnung (14) der Extrusionsdüse (12) rechteckig oder oval ausgeführt ist und die Öffnung (14) bevorzugt eine Breite von 1,5 mm bis 3 mm und eine Höhe von 0,5 mm bis 0,7 mm aufweist.

10. Verfahren nach einem der Ansprüche 7 bis 9, wobei in Schritt b) der Vorverbund (7) an der Extrusionsdüse (12) vorbeigeführt wird.

11. Verfahren nach einem der Ansprüche 7 bis 9, wobei in Schritt b) die Extrusionsdüse (12) mit einem ferngesteuerten Roboter an dem Randspalt (6) vorbeigeführt wird.

12. Verfahren nach einem der Ansprüche 7 bis 11, wobei in Schritt b) der Vorverbund (7) aufgeheizt wird, bevorzugt auf 35 °C bis 100 °C, besonders bevorzugt auf 40 °C bis 80 °C.

13. Verwendung der Verbundglasscheibe (100) nach einem der Ansprüche 1 bis 6 als freistehende Scheibe, bevorzugt als freistehende Fahrzeugseitenscheibe.

## Claims

1. Composite glass pane (100) at least comprising a first glass pane (1), a second glass pane (2), an intermediate layer (5) arranged therebetween, which comprises at least one cover layer (3,4) based on at least one thermoplastic polymer, and a border seal (8), wherein
- the first glass pane (1) is arranged with an offset B relative to the second glass pane (2), wherein a first pane edge (17) of the first glass pane (1) is set back with respect to a second pane edge (18) of the second glass pane (2), wherein the offset B is 0.1 mm to 1 mm,
- the intermediate layer (5) is cut back along at least one edge (a) of the composite glass pane (100) by a border distance A,
- the border seal (8) is arranged in a border gap (6), which is delimited by the first glass pane (1), the second glass pane (2), and the intermediate layer (5), and
- the border seal (8) contains a polymer fusible with the polymer of the cover layers (3,4), wherein the border seal (8) ends with the pane edges (17,18) of the glass panes (1,2) and extends over the entire border distance A and also partially over the region of the offset B, wherein the border seal (8) has an angle of inclination from the first pane edge (17) to the second pane edge (18),.and wherein the border seal (8) is introduced into the border gap (6) by extrusion.

2. Composite glass pane (100) according to claim 1, wherein the border distance A is 1 mm to 10 mm.

3. Composite glass pane (100) according to one of claims 1 through 2, wherein the composite glass pane (100) has along the edges (a) a thickness variation C, which is at most 0.5 mm, is preferably 0.02 mm to 0.1 mm.

4. Composite glass pane (100) according to one of claims 1 through 3, wherein the cover layer (3,4) contains a thermoplastic polymer, preferably a thermoplastic polyvinyl butyral, and the border seal (8) contains a melt of the same thermoplastic polymer.

5. Composite glass pane (100) according to claim 4, wherein an adhesion promoter is added to the thermoplastic polymer used.

6. Composite glass pane (100) according to one of claims 1 through 5, wherein the intermediate layer (5) comprises at least one cover layer (3, 4), a carrier film (16), a corrosion-sensitive functional layer (15) arranged thereon, and another cover layer (3, 4).

7. Method for producing a composite glass pane (100) according to one of claims 1 through 7, wherein
a) a pre-laminate (7) composed of the two glass panes (1,2) and the intermediate layer (5) is produced,
b) a border seal (8) is introduced, by injecting a melt of a thermoplastic polymer fusible with the cover layer (3,4) into the border gap (6) with an extrusion die (12), wherein the opening (14) of the extrusion die (12) is positioned between a first roller (9) and a second roller (10) directly in front of the border gap (6) in that
- the first roller (9) rests against the pane edge (17) of the first glass pane (1) and the second roller (10) rests against the pane edge (18) of the second glass pane (2), wherein the first roller (9) and the second roller (10) are displaceable parallel to the surface of the glass panes (1,2) and thus compensate for the offset B, and
- the pre-laminate (7) rests with a pane surface (19, 20) on a third roller (11), which is displaceable perpendicular to the surface of the glass panes (1,2), and
c) with the supplying of heat and application of pressure, the glass panes (1,2) and the intermediate layer (5) are bonded to form the composite glass pane (100) and the polymer injected into the border gap (6) fuses with the polymer of the cover layer (3,4).

8. Method according to claim 7, wherein border seal (8) protruding on the edges (a, b) of the composite glass pane (100) obtained in step c) is removed.

9. Method according to claim 7 or 8, wherein the opening (14) of the extrusion die (12) is implemented rectangular or oval and the opening (14) preferably has a width of 1.5 mm to 3 mm and a height of 0.5 mm to 0.7 mm.

10. Method according to one of claims 7 through 9, wherein in step b), the pre-laminate (7) is guided past the extrusion die (12).

11. Method according to one of claims 7 through 9, wherein in step b), the extrusion die (12) is guided past the border gap (6) by a remote-controlled robot.

12. Method according to one of claims 7 through 11, wherein in step b), the pre-laminate (7) is heated, preferably to 35 °C to 100 °C, particularly preferably to 40 °C to 80 °C.

13. Use of the composite glass pane (100) according to one of claims 1 through 6 as a freestanding pane, preferably as a freestanding motor vehicle side window pane.

## Revendications

1. Vitrage composite (100) comprenant au moins une première vitre (1), une deuxième vitre (2), une couche intermédiaire (5) disposée entre elles, qui comprend au moins une couche de recouvrement (3, 4) à base d'au moins un polymère thermoplastique, et un joint de bordure (8), dans laquelle
- la première vitre (1) est disposée avec un décalage B par rapport à la seconde vitre (2), un premier bord de vitre (17) de la première vitre (1) étant en retrait par rapport à un second bord de vitre (18) de la seconde vitre (2), le décalage B étant de 0,1 mm à 1 mm,
- la couche intermédiaire (5) est découpée le long d'au moins un bord (a) de la vitre composite (100) d'une distance de bordure A,
- le joint de bordure (8) est disposé dans un espace de bordure (6), qui est délimité par la première vitre (1), la deuxième vitre (2) et la couche intermédiaire (5), et
- le joint de bordure (8) contient un polymère fusible avec le polymère des couches de couverture (3, 4), dans lequel le joint de bordure (8) se termine par les bords (17, 18) des vitres (1, 2) et s'étend sur toute la distance de bordure A et aussi partiellement sur la zone du décalage B, le joint de bordure (8) présentant un angle d'inclinaison du premier bord de vitre (17) au deuxième bord de vitre (18), et le joint de bordure (8) étant introduit par extrusion dans la fente de bordure (6).

2. Vitrage composite (100) selon la revendication 1, dans lequel la distance de bordure A est comprise entre 1 mm et 10 mm.

3. Vitrage composite (100) selon l'une des revendications 1 à 2, dans lequel le vitrage composite (100) présente le long des bords (a) une variation d'épaisseur C, qui est au maximum de 0,5 mm, est de préférence de 0,02 mm à 0,1 mm.

4. Vitrage composite (100) selon l'une des revendications 1 à 3, dans lequel la couche de recouvrement (3, 4) contient un polymère thermoplastique, de préférence un polyvinylbutyral thermoplastique, et le joint de bordure (8) contient une masse fondue du même polymère thermoplastique.

5. Vitrage composite (100) selon la revendication 4, dans lequel un promoteur d'adhésion est ajouté au polymère thermoplastique utilisé.

6. Vitrage composite (100) selon l'une des revendications 1 à 5, dans lequel la couche intermédiaire (5) comprend au moins une couche de recouvrement (3, 4), un film support (16), une couche fonctionnelle sensible à la corrosion (15) disposée sur celui-ci, et une autre couche de recouvrement (3, 4).

7. Procédé de fabrication d'une vitrage composite (100) selon l'une des revendications 1 à 7, dans lequel
a) on fabrique un pré-laminé (7) composé des deux vitres (1, 2) et de la couche intermédiaire (5),
b) on introduit un joint de bordure (8) en injectant une masse fondue d'un polymère thermoplastique fusible avec la couche de recouvrement (3, 4) dans la fente de bordure (6) avec une filière d'extrusion (12), l'ouverture (14) de la filière d'extrusion (12) étant positionnée entre un premier rouleau (9) et un deuxième rouleau (10) directement devant la fente de bordure (6) en ce que
- le premier rouleau (9) s'appuie sur le bord de la vitre (17) de la première vitre (1) et le deuxième rouleau (10) s'appuie sur le bord de la vitre (18) de la deuxième vitre (2), le premier rouleau (9) et le deuxième rouleau (10) pouvant être déplacés parallèlement à la surface des vitres (1, 2) et compensant ainsi le décalage B, et
- le pré-laminé (7) repose avec une surface de vitre (19, 20) sur un troisième rouleau (11), qui est déplaçable perpendiculairement à la surface des vitres (1, 2), et
c) avec l'apport de chaleur et l'application de pression, les vitres (1, 2) et la couche intermédiaire (5) sont liées pour former la vitre composite (100) et le polymère injecté dans l'espace de bordure (6) fusionne avec le polymère de la couche de couverture (3, 4).

8. Procédé selon la revendication 7, dans lequel le joint de bordure (8) faisant saillie sur les bords (a, b) de la vitre en verre composite (100) obtenue à l'étape c) est retiré.

9. Procédé selon la revendication 7 ou 8, dans lequel l'ouverture (14) de la filière d'extrusion (12) est mise en œuvre rectangulaire ou ovale et l'ouverture (14) présente de préférence une largeur de 1,5 mm à 3 mm et une hauteur de 0,5 mm à 0,7 mm.

10. Procédé selon l'une des revendications 7 à 9, dans lequel à l'étape b), le pré-laminé (7) est guidé devant la filière d'extrusion (12).

11. Procédé selon l'une des revendications 7 à 9, dans lequel, à l'étape b), la filière d'extrusion (12) est guidée devant l'espace frontalier (6) par un robot télécommandé.

12. Procédé selon l'une des revendications 7 à 11, dans lequel à l'étape b), le pré-laminé (7) est chauffé, de préférence entre 35 °C et 100 °C, de manière particulièrement préférée entre 40 °C et 80 °C.

13. Utilisation de la vitrage composite (100) selon l'une des revendications 1 à 6 comme vitre autoportante, de préférence comme vitre autoportante de fenêtre latérale de véhicule automobile.
